# EUROPEAN PATENT SPECIFICATION

(11) **EP 3 557 847 B1**
(45) Date of publication and mention of the grant of the patent: **23.12.2020**
(21) Application number: 17894029.2
(22) Date of filing: 27.12.2017
(51) Int. Cl.: H04L 29/08, H04L 5/00, H04L 27/26

(54) **REFERENCE SIGNAL CONFIGURATION METHOD, BASE STATION, AND TERMINAL**
REFERENZSIGNALKONFIGURATIONSVERFAHREN, BASISSTATION UND ENDGERÄT
PROCÉDÉ DE CONFIGURATION DE SIGNAL DE RÉFÉRENCE, STATION DE BASE ET TERMINAL

(30) Priority: 26.01.2017 CN 201710061810
(43) Date of publication of application: 23.10.2019
(73) Proprietor: Huawei Technologies Co., Ltd., Longgang District Shenzhen, Guangdong 518129 (CN)
(72) Inventor: GE, Shibin, Shenzhen Guangdong 518129 (CN); WU, Lu, Shenzhen Guangdong 518129 (CN); BI, Xiaoyan, Shenzhen Guangdong 518129 (CN)
(74) Representative: Gill Jennings & Every LLP
(86) International application number: PCT/CN2017/119087
(87) International publication number: WO 2018/137460

(56) References cited:
- CN-A- 101 222 268
- INTERDIGITAL COMMUNICATIONS: "Coexistence of CP OFDM and CP DFT-s-OFDM for NR UL", 3GPP DRAFT; R1-1609887 , vol. RAN WG1, no. Lisbon, Portugal; 20161010 - 20161014 9 October 2016 (2016-10-09), XP051149913, Retrieved from the Internet: URL:http://www.3gpp.org/ftp/Meetings_3GPP_ SYNC/RAN1/Docs/ [retrieved on 2016-10-09]
- SAMSUNG: "SRS design for NR", 3GPP DRAFT; R1-1700933 , vol. RAN WG1, no. Spokane, USA; 20170116 - 20170120 16 January 2017 (2017-01-16), XP051208449, Retrieved from the Internet: URL:http://www.3gpp.org/ftp/Meetings_3GPP_ SYNC/RAN1/Docs/ [retrieved on 2017-01-16]
- HUAWEI ET AL: "UL SRS design for CSI acquisition and beam management", 3GPP DRAFT; R1-1700074 , vol. RAN WG1, no. Spokane, USA; 20170116 - 20170120 16 January 2017 (2017-01-16), XP051207616, Retrieved from the Internet: URL:http://www.3gpp.org/ftp/Meetings_3GPP_ SYNC/RAN1/Docs/ [retrieved on 2017-01-16]

## Description

### TECHNICAL FIELD

Embodiments of the present invention relate to the field of communications technologies, and in particular, to a reference signal configuration method, a base station, and a terminal.

### BACKGROUND

In RAN1#86bis of the 3rd Generation Partnership Project (3GPP, 3rd Generation Partnership Project), uplink (Uplink, UL) new radio (New Radio, NR) needs to support a discrete Fourier transform-spread-orthogonal frequency division multiplexing (Discrete Fourier Transform-Spread-Orthogonal Frequency Division Multiplexing, DFT-S-OFDM) waveform and a cyclic prefix-orthogonal frequency division multiplexing (Cyclic Prefix-Orthogonal Frequency Division Multiplexing, CP-OFDM) waveform. DFT-S-OFDM is mainly used for user equipment (User Equipment, UE) at an edge of a cell, and CP-OFDM is mainly used for UE at a center of a cell.

In the prior art, if a terminal that uses the DFT-S-OFDM waveform and a terminal that uses the CP-OFDM waveform use a same time-frequency resource, not only a PAPR of the DFT-S-OFDM waveform is high, but also performance of CP-OFDM is affected.

Interdigital Communications: "Coexistence of CP OFDM and CP DFT-s-OFDM for NR UL", 3GPP Draft; R1-1609887, vol. RAN WG1, no. Lisbon, Portugal; 20161010 - 20161014 9 October 2016 (2016-10-09), XP051149913 discloses a cyclic prefix orthogonal frequency division multiplexing uplink and the use of discrete transform-spread-orthogonal frequency division multiplexing in uplink. Samsung: "SRS design for NR", 3GPP Draft; R1-1700933, vol. RAN WG1, no. Spokane, USA; 20170116 - 20170120 16 January 2017 (2017-01-16), XP051208449 discloses an NR-SRS sounding reference signal configuration. Huawei et al: "UL SRS design for CSI acquisition and beam management", 3GPP Draft; R1-1700074, vol. RAN WG1, no. Spokane, USA; 20170116 - 20170120 16 January 2017 (2017-01-16), XP051207616 discloses a sounding reference signal for channel state information acquisition and beam management, and uplink-based measurement.

### SUMMARY

This application provides a reference signal configuration method, a base station, and a terminal, so as to configure a time-frequency resource on which a reference signal of a terminal is located, so that when a terminal that uses a DFT-S-OFDM waveform and a terminal that uses a CP-OFDM waveform use a same time-frequency resource, a PAPR of the DFT-S-OFDM is relatively low while performance of CP-OFDM is ensured.

To achieve the foregoing objective, the present invention provides the aspects defined in the independent claims as technical solutions. Preferred embodiments are provided in the dependent claims.
The scope of the present invention is determined only by the scope of the appended claims. Any embodiment/aspect (of the invention/disclosure) referred to in this description and not fully falling within the scope of said appended claims is an example useful for understanding the present invention.

### DESCRIPTION OF DRAWINGS

FIG. 1 is a schematic structural diagram of a communications system according to an embodiment of the present invention;
FIG. 2a is a schematic structural diagram of a base station according to an embodiment of the present invention;
FIG. 2b is a schematic structural diagram of a baseband subsystem of a base station according to an embodiment of the present invention;
FIG. 3 is a schematic flowchart of a reference signal configuration method according to an embodiment of the present invention;
FIG. 4 is a schematic structural diagram of a resource unit according to an embodiment of the present invention;
FIG. 5 is a schematic structural diagram 1 of reference signal configuration according to an embodiment of the present invention;
FIG. 6 is a schematic structural diagram 2 of reference signal configuration according to an embodiment of the present invention;
FIG. 7 is a schematic structural diagram 3 of reference signal configuration according to an embodiment of the present invention;
FIG. 8a is a schematic structural diagram 4 of reference signal configuration according to an embodiment of the present invention;
FIG. 8b is a schematic structural diagram 5 of reference signal configuration according to an embodiment of the present invention;
FIG. 9 is a schematic structural diagram 6 of reference signal configuration according to an embodiment of the present invention;
FIG. 10 is a schematic diagram of a logical structure of a base station according to an embodiment of the present invention;
FIG. 11 is a schematic structural diagram of a base station according to an embodiment of the present invention;
FIG. 12 is a schematic structural diagram of a base station according to an embodiment of the present invention;
FIG. 13 is a schematic diagram of a logical structure of a terminal according to an embodiment of the present invention;
FIG. 14 is a schematic structural diagram of a terminal according to an embodiment of the present invention; and
FIG. 15 is a schematic structural diagram of a terminal according to an embodiment of the present invention.

### DESCRIPTION OF EMBODIMENTS

The following describes the technical solutions in the embodiments of the present invention in detail with reference to the accompanying drawings in the embodiments of the present invention.
The scope of the present invention is determined only by the scope of the appended claims.

In the embodiments of the present invention, the word such as "example" or "for example" is used to represent giving an example, an illustration, or a description. Any embodiment or design scheme described as an "example" or "for example" in the embodiments of the present invention should not be explained as being more preferred or having more advantages than another embodiment or design scheme. Exactly, use of the word "example" or "for example" is intended to present a concept in a specific manner.

In addition, to clearly describe the technical solutions in the embodiments of the present invention, in the embodiments of the present invention, the terms "first", "second", and the like are used to distinguish between same items or similar items whose functions and purposes are basically the same, and a person skilled in the art may understand that the terms "first", "second", and the like do not limit a quantity and an execution sequence.

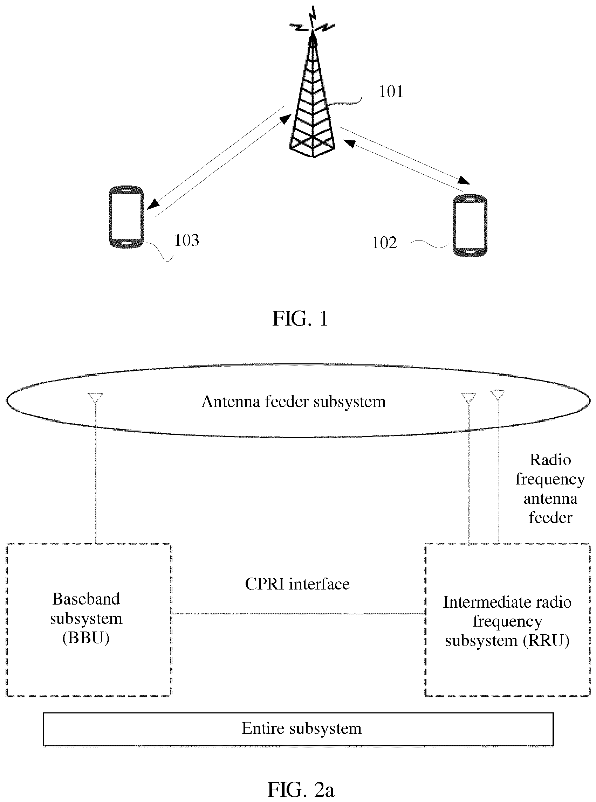

The technical solutions provided in the embodiments of the present invention may be applied to a wireless communications system that supports two waveforms, for example, a wireless communications network that supports a DFT-S-OFDM waveform and a CP-OFDM waveform. As shown in FIG. 1, the system includes a base station 101 and at least one user equipment that communicates with the base station 101 (only two user equipments are shown in FIG. 1), for example, user equipment 102 and user equipment 103 in FIG. 1.

In the embodiments of the present invention, a base station (base station, BS) may be a device that communicates with user equipment (User Equipment, UE) or another communications station such as a relay station, and the base station may provide communication coverage in a specific physical area.

In the embodiments of the present invention, UE may be distributed in an entire wireless network, and each UE may be stationary or in motion.

The UE may be a terminal (terminal), a mobile station (mobile station), a subscriber unit (subscriber unit), a station (station), or the like. The UE may be a cellular phone (cellular phone), a personal digital assistant (personal digital assistant, PDA), a wireless modem (Modem), a wireless communications device, a handheld (handheld) device, a laptop computer (laptop computer), a cordless phone (cordless phone), a wireless local loop (wireless local loop, WLL) station, or the like. When the UE is applied to communication in an M2M manner, the UE may be referred to as an M2M terminal, and may be specifically a smart meter, a smart appliance, or the like that supports M2M communication.

As shown in FIG. 2a, as an example, the base station includes a baseband subsystem, an intermediate radio frequency subsystem, an antenna feeder subsystem, and some support structures (for example, an entire subsystem). The baseband subsystem is used to implement operation and maintenance of the entire base station, signaling processing, radio resource management, and a transmission interface to an EPC (Evolved Packet Core, evolved packet core), and implement a main control function of operation and maintenance of an LTE physical layer, a MAC (Media Access Control, media access control) layer, and L3 signaling. The intermediate radio frequency subsystem implements conversion among a baseband signal, an intermediate frequency signal, and a radio frequency signal, and implements demodulation of an LTE wireless receive signal, modulation of a transmit signal, and power amplification. The antenna feeder subsystem includes an antenna and a feeder connected to a radio frequency module of the base station, and an antenna and a feeder of a GRS receiving card, so as to implement receiving and sending of a wireless air interface signal. The entire subsystem is a support part of the baseband subsystem and the intermediate frequency subsystem, and provides a structure, power supply, and an environment monitoring function.

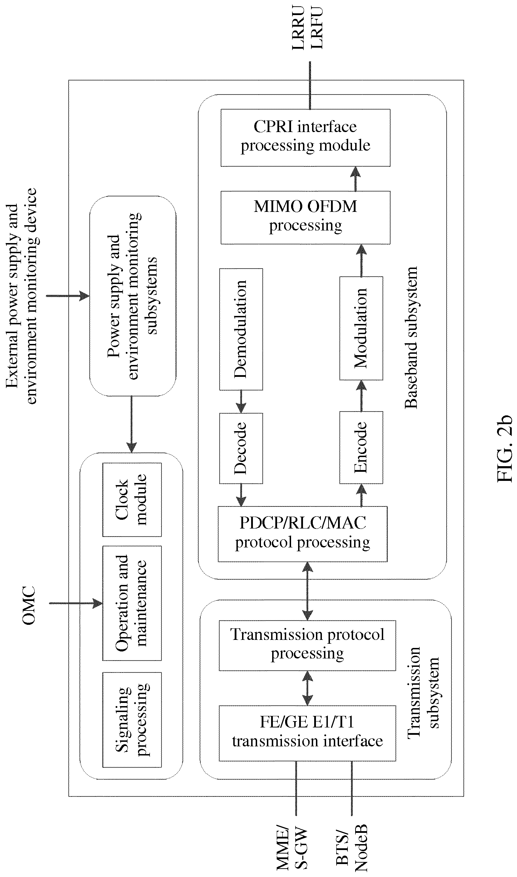

The baseband subsystem may be shown in FIG. 2b. For example, that a mobile phone accesses the Internet may be as follows: The mobile phone accesses a core network (MME/S-GW) by using the base station, and then accesses the Internet by using the core network. Herein, data of the Internet is transmitted to a baseband part by using an interface between the core network and the base station; the baseband part performs processing at a PDCP layer, an RLC layer, and a MAC layer, encoding, modulation, and the like, and sends processed data to a radio frequency part; and the radio frequency part transmits the processed data to the terminal. The baseband part may be connected to the radio frequency part by using a CPRI interface. In addition, an optical fiber may be currently used to remove the radio frequency part, for example, a remote RRU. A baseband in each step of the configuration method in the embodiments of the present invention is implemented by using a radio frequency. In addition, a receiving step and a sending step are implemented by using an antenna (for example, an air interface).

An interface between the terminal and the base station used in the embodiments of the present invention may be understood as an air interface used for communication between the terminal and the base station, or may be referred to as a Uu interface.

A reference signal (Reference Signal, RS) is also referred to as a pilot (Pilot) or a training sequence and is known for both a transmitting device and a receiving device. Reference signals have a variety of functions, and may be classified into a plurality of types based on a specific function, for example, a reference signal used to obtain channel state information (Channel State Information Reference, CSI), a reference signal used to demodulate a received signal, and a reference signal used to manage a beam. In particular, some reference signals may be used for a variety of purposes. A reference signal transmission mode and configuration of a resource that carries the reference signal may vary with the purpose. Optionally, the reference signal in the embodiments of the present invention is a demodulation reference signal (Demodulation Reference Signal, DMRS). Because the DMRS and data are precoded by using a same precoding matrix, channel estimation may be performed on a precoded channel (which is also referred to as an equivalent channel) based on the DMRS, and the data is demodulated based on a channel estimation result. Therefore, the DMRS is used to demodulate a received signal.

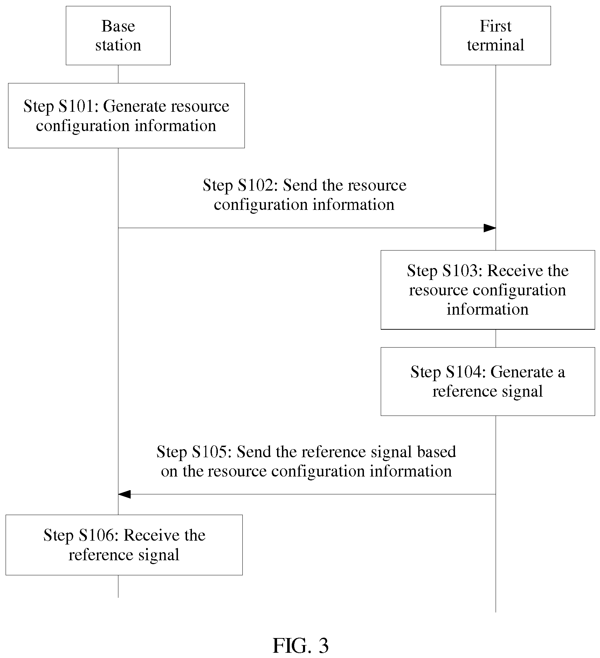

FIG. 3 shows a reference signal configuration method provided in an embodiment of the present invention. As shown in FIG. 3, the method includes the following steps.

S101: Abase station generates resource configuration information, where the resource configuration information is used to indicate a resource unit occupied by a reference signal of a first terminal, a time-frequency resource on which the resource unit is located includes a plurality of contiguous symbols in time domain and a plurality of contiguous subcarriers in frequency domain, the reference signal is carried in at least one of the plurality of symbols, the reference signal is carried in a plurality of subcarrier groups on the symbol that carries the reference signal, each of the plurality of subcarrier groups includes a plurality of subcarriers whose frequencies are contiguous, adjacent subcarrier groups are spaced by a preset quantity of subcarriers, the reference signal occupies one subcarrier in each subcarrier group, and the first terminal uses a first waveform. It can be learned that the resource unit includes at least one of the plurality of symbols in time domain and one subcarrier in each of the plurality of subcarrier groups in frequency domain. The foregoing time-frequency resource may be similar to an RB or an RB pair in LTE.

Optionally, the first waveform in this embodiment of the present invention is a discrete Fourier transform-spread-orthogonal frequency division multiplexing DFT-S-OFDM waveform.

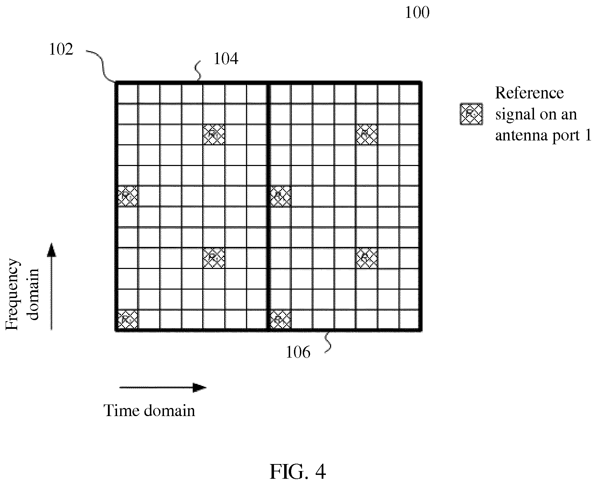

In S101, the base station generates the resource configuration information. The resource configuration information is used to indicate the resource unit occupied by the reference signal of the first terminal. FIG. 4 is an example schematic diagram of a distribution pattern 100 of resources used by the reference signal of the first terminal based on an indication of the base station. As an example, in time domain, a minimum resource granularity may be one OFDM symbol, or may be one SC-FDMA symbol during uplink transmission (which are collectively referred to as the OFDM symbol below). In frequency domain, a minimum resource granularity is one subcarrier. One time-frequency resource unit, that is, one resource element (Resource Element, RE), includes one OFDM symbol and one subcarrier. Resource mapping is performed at a physical layer on an RE basis. As shown in FIG. 4, resource elements (Resource Element, RE) occupied by the reference signal R corresponding to an antenna port 1 are distributed in two resource blocks 104 and 106 included in a resource block (Resource Block) pair 102. The resource block pair 102 includes a plurality of contiguous symbols in time domain and a plurality of contiguous subcarriers in frequency domain. In addition, in the resource block pair 102, locations of resource elements that carry the reference signal are fixed. Based on the reference signal carried in the resource elements, channel estimation can be performed on the entire resource block 102 with reference to a specific interpolation method. It can be learned that the resource unit includes at least one of the plurality of symbols in time domain and one subcarrier in each of the plurality of subcarrier groups in frequency domain. The foregoing time-frequency resource may be similar to the RB or the RB pair in LTE. This embodiment of the present invention provides a resource unit, and the resource unit may be used as a basic unit for resource allocation when scheduling is performed for a user, or may be a unit used to describe a manner of arranging a plurality of reference signals. With reference to FIG. 4, the following describes the resource unit provided in this embodiment of the present invention.

FIG. 4 is a schematic structural diagram of a resource unit 100 according to this embodiment of the present invention. As shown in FIG. 4, the resource unit (Resource Unit) 100 occupies a plurality of contiguous subcarriers in frequency domain and a plurality of contiguous symbols (OFDM symbols) in time domain. A minimum unit of the resource unit is a resource element (Resource Element, RE), and each resource element occupies one subcarrier in frequency domain and one symbol in time domain. Generally, the resource unit 100 includes a plurality of REs.

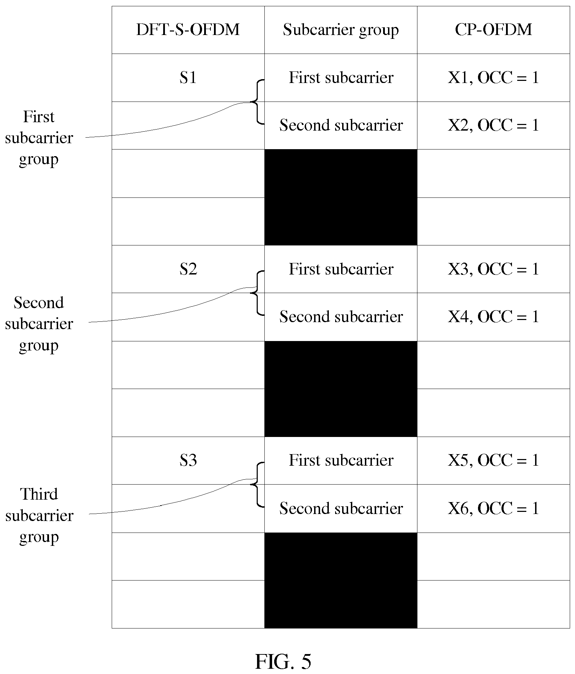

Referring to FIG. 5, the reference signal of the first terminal is carried in at least one of the plurality of symbols. On the symbol that carries the reference signal, the reference signal is carried in the plurality of subcarrier groups, such as a first subcarrier group, a second subcarrier group, and a third subcarrier group in FIG. 5. Herein, for ease of illustration, only three subcarrier groups are listed as an example. A person skilled in the art can understand that a quantity of subcarrier groups may be one or more, and is not limited to the three groups listed herein.

Each of the plurality of subcarrier groups includes a plurality of contiguous subcarriers. As shown in FIG. 5, the first subcarrier group includes a first subcarrier and a second subcarrier. As described above, in this embodiment of the present invention, that one subcarrier group may include two subcarriers is only used as an example. It may be understood that, in an actual use process, one subcarrier group may alternatively include three or more subcarriers. Subcarriers of a preset quantity are spaced between the adjacent subcarrier groups. In a possible implementation, the reference signal occupies one subcarrier in each subcarrier group. If one subcarrier group includes two subcarriers, the reference signal occupies half of resources in the subcarrier group. Likewise, if one subcarrier group includes three or more subcarriers, the reference signal occupies one-third or less of the resources in the subcarrier group. A person of ordinary skill in the art may understand that, it is a possible implementation that the reference signal may also occupy two or more subcarriers when the subcarrier group includes three or more subcarriers, provided that the subcarriers occupied by the reference signal are only some of the subcarriers in the subcarrier group and that the reference signal can maintain a low peak-to-average power ratio (PAPR-Peak to Average Power Ratio, PAPR).

Step S102: After the base station determines the resource unit occupied by the reference signal of the first terminal, the base station sends the resource configuration information to the terminal. Optionally, the base station may send the resource configuration information to the terminal by using downlink control information (Downlink control information, DCI).

In step S103 and step S104, the first terminal receives and saves the resource configuration information sent by the base station. Then, in step S104 and step S105, the first terminal generates the reference signal, and a first base station sends the reference signal to the base station based on the resource unit indicated by the saved resource configuration information.

It may be understood that, after step S105 in this embodiment of the present invention, the method provided in this embodiment of the present invention further includes the following step.

Step S106: The base station receives the reference signal sent by the first terminal.

At a same time, one terminal can use only one waveform, that is, the DFT-S-OFDM waveform or a CP-OFDM waveform. For different terminals, at a same time, one terminal can use the DFT-S-OFDM waveform, and the other terminal can use the CP-OFDM waveform. In this way, MU between a first terminal that uses the DFT-S-OFDM waveform and a second terminal that uses the CP-OFDM waveform at the same time can be implemented. Because DFT-S-OFDM is used for user equipment at an edge of a cell and CP-OFDM is used for user equipment at a center of a cell, CP-OFDM can use a time-frequency resource occupied by DFT-S-OFDM, thereby improving performance of CP-OFDM.

Optionally, the subcarrier occupied by the reference signal in each subcarrier group is a subcarrier with a highest frequency or a lowest frequency.

Specifically, in an actual use process, it may be determined, based on a parameter such as channel quality, that the reference signal is placed on the subcarrier with the highest frequency or the subcarrier with the lowest frequency in each subcarrier group.

The reference signal of the first terminal is multiplexed on the subcarrier by using an orthogonal code of the reference signal, and a reference signal of the second terminal is multiplexed on the subcarrier by using an orthogonal code of the reference signal; that is, the reference signal of each terminal is multiplexed on the subcarrier in the subcarrier group by using an orthogonal code of the terminal. The orthogonal code may be an orthogonal cover code (Orthogonal Cover Code, OCC).

The following uses an example in which each subcarrier group includes two subcarriers, the first waveform is the DFT-S-OFDM waveform, and the reference signal of the second terminal that uses the CP-OFDM waveform is carried in a subcarrier group that carries a DMRS to describe specific content of sending the resource configuration information by the base station to the terminal, and distribution of the reference signals of the first terminal that uses the DFT-S-OFDM waveform and the reference signals of the second terminal that uses the CP-OFDM waveform on a pattern.

The resource configuration information in this embodiment of the present invention includes a first identifier of each of the plurality of subcarrier groups that carry the reference signal, and a second identifier of a subcarrier occupied by the reference signal in the subcarrier group that carries the reference signal. Specifically, in this embodiment of the present invention, if the subcarrier group that carries the reference signal is further used to carry a reference signal of a terminal that uses the CP-OFDM waveform, when the base station sends configuration information to the terminal that uses the CP-OFDM waveform, the configuration information may include only an identifier of the subcarrier group in which the reference signal is located.

The first identifier is used to uniquely identify the subcarrier group, and the second identifier is used to uniquely identify the subcarrier. For example, the first identifier and the second identifier may be numbers. For example, each subcarrier group may be numbered, for example, the first subcarrier group is numbered 10, the second subcarrier group is numbered 20, and so on. Details are not described herein in this embodiment of the present invention. It may be understood that the foregoing example only illustrates that the identifier of each subcarrier group is a number and may be set based on a requirement during an actual use process. For another example, a number of the first subcarrier in the first subcarrier group may be 101.

For example, as shown in FIG. 5, the configuration indication information sent by the base station to the second terminal that uses the CP-OFDM waveform is only used to indicate a specific subcarrier group that carries the reference signal. After receiving the configuration indication information, the second terminal that uses the CP-OFDM waveform sends the reference signal in the subcarrier group indicated by the configuration indication information. That is, as shown in FIG. 5, reference signals X1, X2, X3, X4, X5, and X6 of the terminal that uses the CP-OFDM waveform are respectively configured on each subcarrier in the first subcarrier group, the second subcarrier group, and the third subcarrier group.

As an example, in this embodiment of the present invention, the terminal that uses the first waveform such as the DFT-S-OFDM waveform includes reference signals S1, S2, and S3. The resource configuration information is used to indicate that the reference signal S1 is carried in the first subcarrier group, and the reference signal S1 occupies the first subcarrier in the first subcarrier group, that the reference signal S2 is carried in the second subcarrier group, and the reference signal S2 occupies a first subcarrier in the second subcarrier group, and that the reference signal S3 is carried in the third subcarrier group, and the reference signal S3 occupies a first subcarrier in the third subcarrier group. After receiving the resource configuration information, the first terminal maps the reference signal S1 onto the first subcarrier in the first subcarrier group, maps the reference signal S2 onto the first subcarrier in the second subcarrier group, and maps the reference signal S3 onto the first subcarrier in the third subcarrier group.

According to another aspect, the resource configuration information in this embodiment of the present invention includes the first identifier of each of the plurality of subcarrier groups that carry the reference signals, and an OCC codebook sequence is corresponding to the reference signal. The OCC codebook sequence includes a plurality of indicators, and each of the plurality of indicators is corresponding to one subcarrier in the subcarrier group that carries the reference signal. The OCC codebook sequence corresponding to one reference signal is used to instruct the first terminal to configure the reference signal on a specific subcarrier in the subcarrier group that carries the reference signal. That is, the OCC codebook sequence corresponding to one reference signal is used to indicate a specific location of the reference signal in the subcarrier group.

Specifically, a quantity of indicators in the OCC codebook sequence may be determined based on a quantity of subcarriers in the subcarrier group that carries the reference signal corresponding to the OCC codebook.

The OCC codebook sequence in this embodiment of the present invention includes a first indicator and a second indicator, for example, the first indicator is "1" and the second indicator is "0".

In this embodiment of the present invention, even if content corresponding to the OCC codebook sequence is the same, that is, the OCC codebook sequence includes both the first indicator and the second indicator, functions of each indicator in the OCC codebook are different, so that the terminal may perform different processing on the reference signal based on the OCC codebook corresponding to the reference signal. Therefore, the following provides description with reference to corresponding cases.

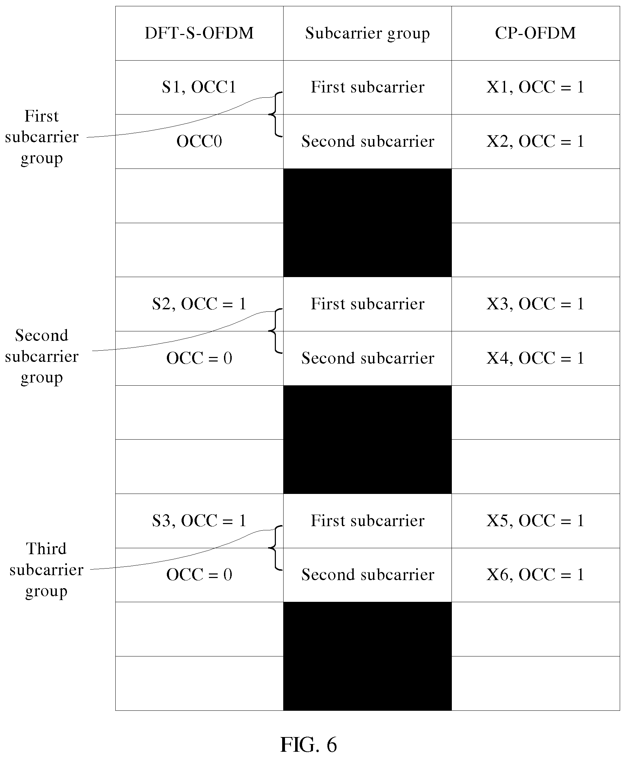

According to one aspect, for example, the first indicator in the OCC codebook sequence is used to instruct the first terminal to map the reference signal onto a subcarrier corresponding to the first indicator, the second indicator in the OCC codebook sequence is used to instruct the first terminal not to map the reference signal onto a subcarrier corresponding to the second indicator, the resource configuration information is used to indicate that the reference signal S1, the reference signal S2, and the reference signal S3 are respectively carried in the first subcarrier group, the second subcarrier group, and the third subcarrier group, and the codebooks corresponding to the reference signal S1, the reference signal S2, and the reference signal S3 are [1, 0]. If an indicator corresponding to the first subcarrier in the first subcarrier group is the first indicator 1, the first terminal maps the reference signal S1 onto the first subcarrier; or if an indicator corresponding to the second subcarrier in the first subcarrier group is 0, the first terminal does not map the reference signal S2 onto the second subcarrier. If the first subcarrier in the second subcarrier group is corresponding to the indicator 1, the first terminal maps the reference signal S2 onto the first subcarrier in the second subcarrier group; or if a second subcarrier in the second subcarrier group is corresponding to the indicator 0, the terminal does not map the reference signal S2 onto the second subcarrier in the second subcarrier group. If the first subcarrier in the third subcarrier group is corresponding to the indicator 1, the first terminal maps the reference signal S3 onto the first subcarrier in the third subcarrier group; or if a second subcarrier in the third subcarrier group is corresponding to the indicator 0, the first terminal does not map the reference signal S3 onto the second subcarrier in the third subcarrier group. Specifically, distribution of the reference signals on the resource unit may be shown in FIG. 6.

According to another aspect, the first indicator in the OCC codebook sequence is used to instruct the first terminal to generate a reference signal on a subcarrier in the subcarrier group that carries the reference signal, and the second indicator in the OCC codebook sequence is used to instruct the first terminal not to generate a reference signal on a subcarrier in the subcarrier group that carries the reference signal.

For example, if the OCC codebook sequence corresponding to the reference signal is [1, 0], it may be understood that the first terminal generates a reference signal on one subcarrier in the subcarrier group that carries the reference signal, and does not generate a reference signal on another subcarrier in the subcarrier group that carries the reference signal; that is, a sequence of the reference signals generated on the subcarrier group that carries the reference signal is [S1, 0].

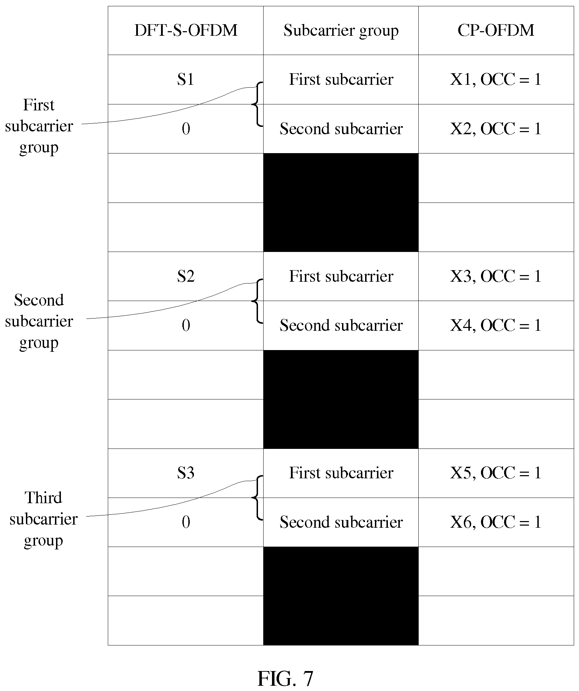

The following uses the reference signal S1, the reference signal S2, and the reference signal S3 as an example for detailed description: If the first terminal determines that the codebook corresponding to the reference signal is [S1, 0], a sequence of the reference signals generated on the subcarrier group that carries the reference signal S1, the reference signal S2, and the reference signal S3 is [S1, 0, S2, 0, S3, 0...]. The first terminal configures, based on the sequence of the generated reference signals, the reference signals on the subcarriers in the subcarrier group that carries the reference signal, as shown in FIG. 7.

It may be understood that if the codebook corresponding to the reference signal is [0, 1], that is, if the codebooks respectively corresponding to the reference signal S1, the reference signal S2, and the reference signal S3 are [0, 1], the sequence of the reference signals generated by the first terminal is [0, S1, 0, S2, 0, S3...]. Finally, the first terminal places, based on the sequence [0, S1, 0, S2, 0, S3...] corresponding to the foregoing reference signals, the reference signals on the subcarriers that carry the reference signals.

According to still another aspect, in this embodiment of the present invention, each indicator in the OCC codebook sequence is used to instruct the first terminal to map a result obtained by multiplying the reference signal by the indicator onto a subcarrier in the subcarrier group that carries the reference signal.

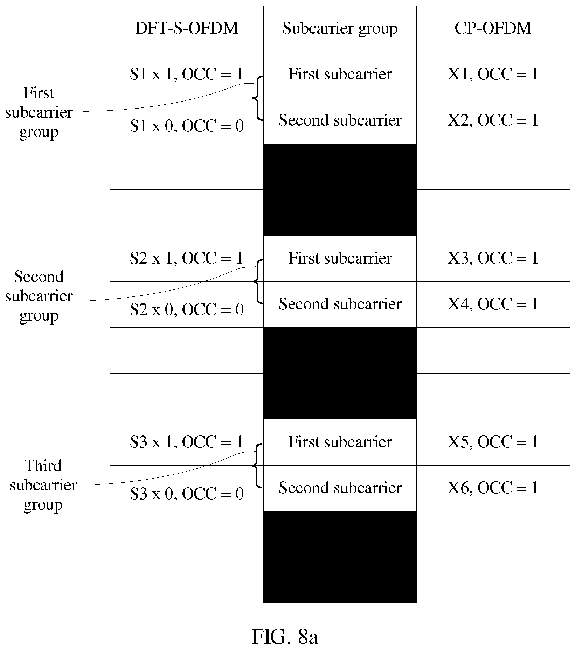

For example, if the sequence of the reference signals generated by the first terminal is [S1, S1, S2, S2, S3, S3, ...], the reference signal S1 is carried in the first subcarrier group, the reference signal S2 is carried in the second subcarrier group, and the reference signal S3 is carried in the third subcarrier group. After generating the reference signal sequence, the first terminal multiplies each reference signal in the reference signal sequence by an indicator in an OCC codebook sequence, and maps a result obtained by multiplying each reference signal by the indicator in the codebook sequence corresponding to the reference signal onto a subcarrier, as shown in FIG. 8a. The reference signal S1 is multiplied by the indicator 1 in the OCC codebook, so that the reference signal S1 is carried in the first subcarrier in the first subcarrier group. The reference signal S1 is multiplied by the indicator 0 in the OCC codebook, so that the reference signal S1 is not carried in the second subcarrier in the first subcarrier group. The reference signal S2 is multiplied by the indicator 1 in the OCC codebook, so that the reference signal S2 is carried in the first subcarrier in the second subcarrier group. The reference signal S2 is multiplied by the indicator 0 in the OCC codebook, so that the reference signal S2 is not carried in the second subcarrier in the second subcarrier group. The reference signal S3 is multiplied by the indicator 1 in the OCC codebook, so that the reference signal S3 is carried in the first subcarrier in the third subcarrier group. The reference signal S3 is multiplied by the indicator 0 in the OCC codebook, so that the reference signal S3 is not carried in the second subcarrier in the third subcarrier group.

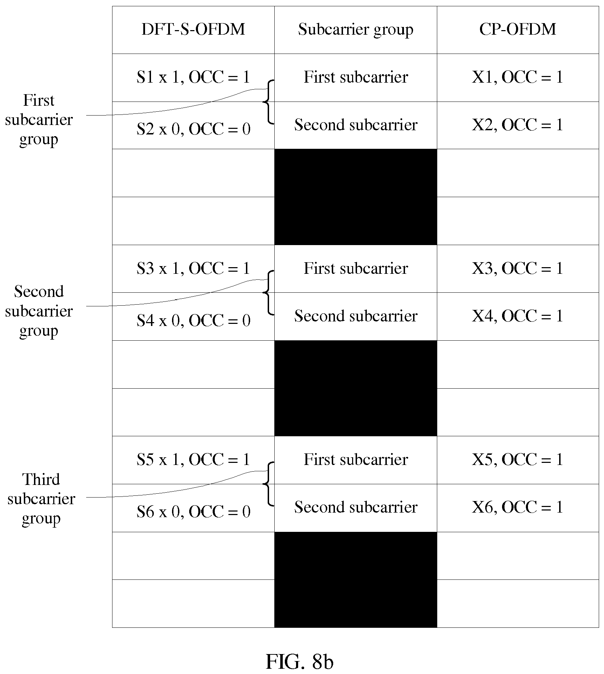

For example, if the sequence of the reference signals generated by the first terminal is [S1, S2, S3, S4, S5, S6, ...], the reference signal S1 and the reference signal S2 are carried in the first subcarrier group, the reference signal S3 and the reference signal S4 are carried in the second subcarrier group, and the reference signal S5 and the reference signal S6 are carried in the third subcarrier group. After generating the reference signal sequence [S1, S2, S3, S4, S5, S6, ...], the first terminal multiplies each reference signal in the reference signal sequence [S1, S2, S3, S4, S5, S6, ...] by an indicator in an OCC codebook sequence, and maps a result obtained by multiplying each reference signal by the indicator in the codebook sequence corresponding to the reference signal onto a subcarrier. As shown in FIG. 8b, the reference signal S1 is multiplied by the indicator 1 in the OCC codebook, so that the reference signal S1 is carried in the first subcarrier in the first subcarrier group. The reference signal S2 is multiplied by the indicator 0 in the OCC codebook, so that the reference signal S2 is not carried in the second subcarrier in the first subcarrier group. The reference signal S3 is multiplied by the indicator 1 in the OCC codebook, so that the reference signal S3 is carried in the first subcarrier in the second subcarrier group. The reference signal S4 is multiplied by the indicator 0 in the OCC codebook, so that the reference signal S4 is not carried in the second subcarrier in the second subcarrier group. The reference signal S5 is multiplied by the indicator 1 in the OCC codebook, so that the reference signal S5 is carried in the first subcarrier in the third subcarrier group. The reference signal S6 is multiplied by the indicator 0 in the OCC codebook, so that the reference signal S6 is not carried in the second subcarrier in the third subcarrier group.

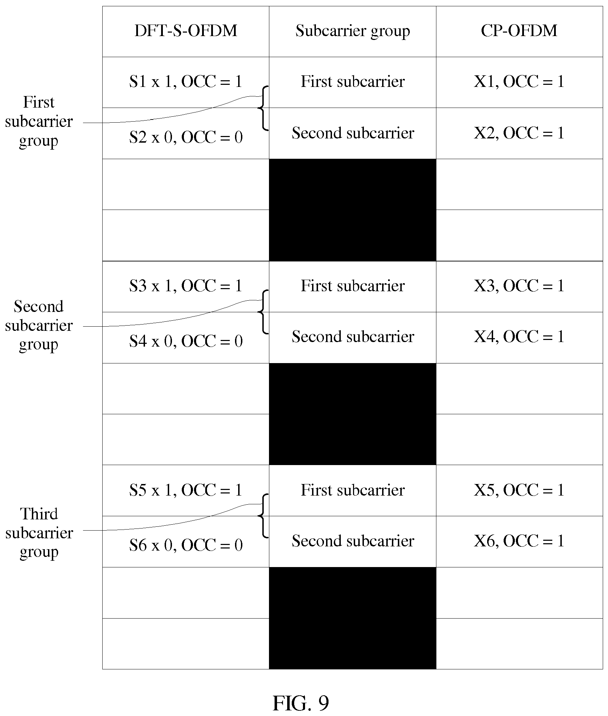

According to yet another aspect, the resource configuration indication information includes the first identifier of each of the plurality of subcarrier groups that carry the reference signals, and the OCC codebook sequences corresponding to the reference signals, where the first terminal and the second terminal use different OCC codebooks. For example, an OCC codebook used by the first terminal is [1, 0], and an OCC codebook used by the second terminal is [1, 1]. Then, as shown in FIG. 9, the sequence of the reference signals generated by the first terminal is [S1, S2, S3, S4, S5, S6...], and a sequence of reference signals generated by the first terminal is [X1, X2, X3, X4, X5, X6...]. For the first terminal, after the reference signal S1 is multiplied by the indicator 1 in the OCC codebook, the reference signal S1 is carried in the first subcarrier in the first subcarrier group, and after the reference signal S2 is multiplied by the indicator 0 in the OCC codebook, the reference signal S2 is not carried in the second subcarrier in the first subcarrier group. For the second terminal, after a reference signal X1 is multiplied by the indicator 1 in the OCC codebook, the reference signal X1 is carried in the first subcarrier in the first subcarrier group, and after a reference signal X2 is multiplied by the indicator 1 in the OCC codebook, the reference signal X2 is carried in the first subcarrier in the first subcarrier group. As shown in FIG. 9, for distribution manner and principle of the remaining reference signals, reference may be made to reference signals S1, S2, X1, and X2. Details are not described herein again in this embodiment of the present invention. Finally, as shown in FIG. 9, the reference signal S1 is carried in the first subcarrier in the first subcarrier group, the reference signal S3 is carried in the first subcarrier in the second subcarrier group, and the reference signal S5 is carried in the first subcarrier in the third subcarrier group. The reference signal X1 is carried in the first subcarrier in the first subcarrier group, the reference signal X2 is carried in the second subcarrier in the first subcarrier group, the reference signal X3 is carried in the first subcarrier in the second subcarrier group, the reference signal X4 is carried in the second subcarrier in the second subcarrier group, the reference signal X5 is carried in the first subcarrier in the third subcarrier group, and the reference signal X6 is carried in the second subcarrier in the third subcarrier group.

The foregoing has described the solutions provided in this application mainly from a perspective of interaction between the base station and the terminal. It may be understood that to implement the foregoing functions, the base station and the terminal include hardware structures and/or software modules for performing corresponding functions. A person of ordinary skill in the art should easily be aware that, in combination with the examples described in the embodiments disclosed in this specification, network element, algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of the present invention, function module division may be performed on the base station and the terminal based on the foregoing method example. For example, each function module may be obtained through division based on a corresponding function, or two or more functions may be integrated into one processing module. The integrated module may be implemented in a form of hardware, or may be implemented in a form of a software function module. It should be noted that, in this embodiment of the present invention, module division is used as an example, and is merely a logical function division. In actual implementation, another division manner may be used.

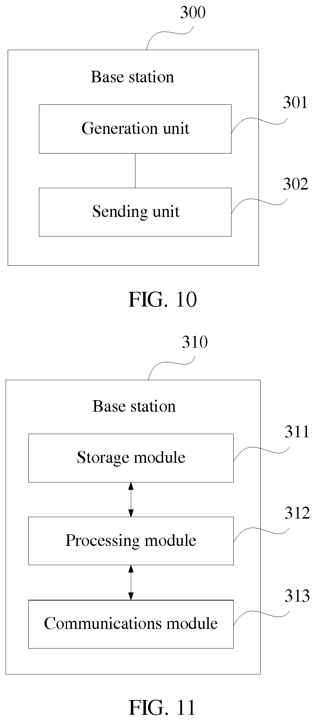

When each function module is obtained through division based on each corresponding function, FIG. 10 is a possible schematic structural diagram of the base station in the foregoing embodiment. The base station 300 includes a generation unit 301 and a sending unit 302. The generation unit 301 is configured to perform step S101 in the foregoing embodiment; and the sending unit 302 is configured to perform step S102 in the foregoing embodiment. All related content of the steps in the foregoing method embodiment may be cited in function descriptions of corresponding function modules, and details are not described herein again.

Specifically, during implementation in a form of hardware, the generation unit 301 may be a processor of the base station, the sending unit 302 may be a transmitter, and the transmitter may be integrated with a receiver to form a transceiver.

When an integrated unit is used, FIG. 11 is a possible schematic diagram of a logical structure of a base station 310 in the foregoing embodiment. The base station 310 includes a processing module 312 and a communications module 313. The processing module 312 is configured to control and manage an action of an application function, for example, the processing module 312 is configured to perform steps S101 and S102 in the foregoing embodiment, and/or is configured to perform another process of the technology described in this specification. The communications module 313 is configured to communicate with a terminal. The base station 310 may further include a storage module 311, configured to store program code and data of the base station.

The processing module 312 may be a processor or a controller, for example, may be a central processing unit, a general purpose processor, a digital signal processor, an application-specific integrated circuit, a field programmable gate array or another programmable logic device, a transistor logical device, a hardware component, or any combination thereof. The processing module 312 may implement or execute various example logical blocks, modules, and circuits described with reference to content disclosed in the present invention. Alternatively, the processor may be a combination for implementing a computing function, for example, a combination of one or more microprocessors, or a combination of a digital signal processor and a microprocessor. The communications module 313 may be a transceiver, a transceiver circuit, or the like. The storage module 311 may be a memory.

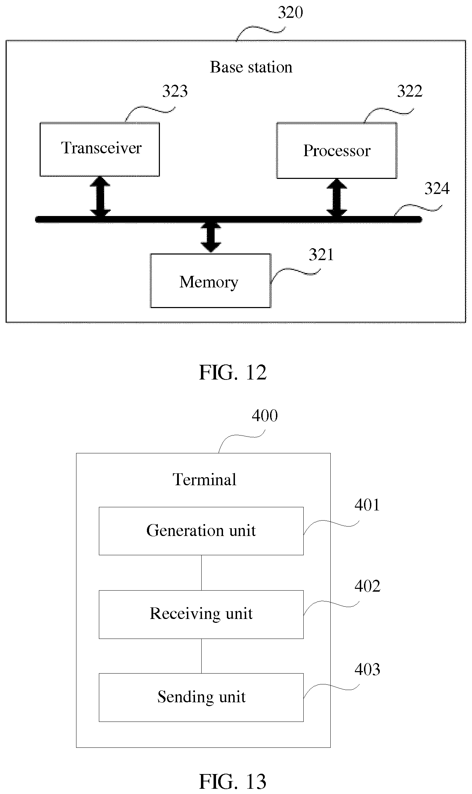

When the processing module 312 is a processor, the communications module 313 is a transceiver, and the storage module 311 is a memory, the base station in this embodiment of the present invention may be a device shown in FIG. 12.

FIG. 12 shows an example structure of a base station. The base station 320 includes a processor 322, a transceiver 323, a memory 321, and a bus 324. The transceiver 323, the processor 322, and the memory 321 are connected to each other by using the bus 324. The bus 324 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of illustration, only one thick line is used in FIG. 12 to represent the bus, but it does not indicate that there is only one bus or only one type of bus.

When each function module is obtained through division based on each corresponding function, FIG. 13 is a possible schematic structural diagram of a terminal in the foregoing embodiment. The terminal 400 includes a generation unit 401, a receiving unit 402, and a sending unit 403. The generation unit 401 is configured to perform step S103 in the foregoing embodiment; the receiving unit 402 is configured to perform step S104 in the foregoing embodiment; and the sending unit 403 is configured to perform step S105 in the foregoing embodiment. All related content of the steps in the foregoing method embodiment may be cited in function descriptions of corresponding function modules, and details are not described herein again.

Specifically, during implementation in a form of hardware, the generation unit 401 may be a processor of the base station, the receiving unit 402 may be a receiver, the sending unit 403 may be a transmitter, and the receiver may be integrated with the transmitter to form a transceiver of the terminal.

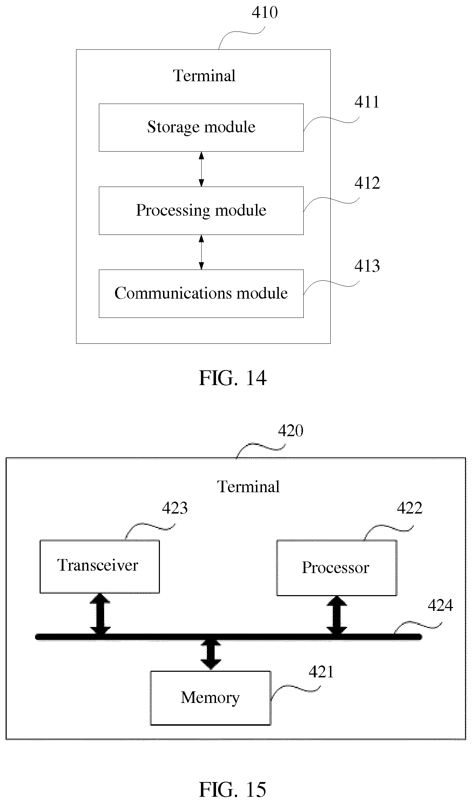

When an integrated unit is used, FIG. 14 is a possible schematic diagram of a logical structure of a terminal 410 in the foregoing embodiment. The terminal 410 includes a processing module 412 and a communications module 413. The processing module 412 is configured to control and manage an action of the terminal, for example, the processing module 412 is configured to perform steps S103, S104 and S105 in the foregoing embodiment, and/or is configured to perform another process of the technology described in this specification. The communications module 413 is configured to communicate with a base station. The terminal 410 may further include a storage module 411, configured to store program code and data of the terminal.

The processing module 412 may be a processor or a controller, for example, may be a central processing unit, a general purpose processor, a digital signal processor, an application-specific integrated circuit, a field programmable gate array or another programmable logic device, a transistor logic device, a hardware component, or any combination thereof. The processing module 412 may implement or execute various example logical blocks, modules, and circuits described with reference to content disclosed in the present invention. Alternatively, the processor may be a combination for implementing a computing function, for example, a combination of one or more microprocessors, or a combination of a digital signal processor and a microprocessor. The communications module 413 may be a transceiver, a transceiver circuit, or the like. The storage module 411 may be a memory.

When the processing module 412 is a processor, the communications module 413 is a transceiver, and the storage module 411 is a memory, the terminal in this embodiment of the present invention may be a device shown in FIG. 15.

FIG. 15 shows an example structure of a terminal, where the terminal 420 includes a processor 422, a transceiver 423, a memory 421, and a bus 424. The transceiver 423, the processor 422, and the memory 421 are interconnected by using the bus 424. The bus 424 may be a PCI bus, an EISA bus, or the like. The bus may be classified into an address bus, a data bus, a control bus, and the like. For ease of illustration, only one thick line is used in FIG. 15 to represent the bus, but it does not indicate that there is only one bus or only one type of bus.

According to one aspect, an embodiment provides a computer readable storage medium, where the computer readable storage medium stores an instruction, and when the computer readable storage medium runs on a computer, the base station is enabled to perform steps S101 and S102 in the foregoing embodiment.

According to another aspect, an embodiment provides a computer readable storage medium, where the computer readable storage medium stores an instruction, and when the computer readable storage medium runs on a computer, the terminal is enabled to perform steps S103 to S105 in the foregoing embodiment.

All or some of the foregoing embodiments may be implemented in a form of software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions described according to the embodiments of the present invention are all or partially generated. The computer may be a general purpose computer, a dedicated computer, a computer network, or other programmable apparatuses. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line DSL) or wireless (for example, infrared, radio, and microwave, or the like) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiment, and details are not described herein again.

The scope of the present invention is determined only by the scope of the appended claims.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a computer readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in the embodiments of this application. The foregoing storage medium includes: any medium that can store program code, such as a flash memory, a removable hard disk, a read-only memory, a random access memory, a magnetic disk, or an optical disc.

## Claims

1. A reference signal configuration method, comprising:
generating (S101), by a base station (101), resource configuration information, wherein the resource configuration information is used to indicate a resource unit occupied by a reference signal of a first terminal, a time-frequency resource on which the resource unit is located comprises a plurality of contiguous symbols in time domain and a plurality of contiguous subcarriers in frequency domain, the reference signal of the first terminal is carried in at least one of the plurality of symbols, the reference signal of the first terminal is carried in a plurality of subcarrier groups of said plurality of contiguous subcarriers on the at least one of the plurality of symbols that carries the reference signal of the first terminal, each of the plurality of subcarrier groups comprises a plurality of subcarriers whose frequencies are contiguous, wherein adjacent subcarrier groups of said plurality of subcarrier groups are spaced by a preset quantity of subcarriers, the reference signal of the first terminal occupies one subcarrier in each subcarrier group of said plurality of subcarrier groups, and the first terminal uses a first waveform for communicating with the base station; and
sending (S102), by the base station, the resource configuration information to the first terminal,
wherein the first waveform is a discrete Fourier transform-spread-orthogonal frequency division multiplexing DFT-S-OFDM waveform,
wherein each subcarrier in the plurality of subcarrier groups that carry the reference signal of the first terminal is used to carry in the same subcarrier a reference signal of a second terminal, wherein the second terminal uses a cyclic prefix-orthogonal frequency division multiplexing CP-OFDM waveform for communicating with the base station, and the reference signal of the second terminal is a demodulation reference signal, DMRS.

2. The method according to claim 1, wherein each subcarrier group comprises two contiguous subcarriers.

3. The method according to claim 1, wherein a subcarrier occupied by the reference signal of the first terminal in each subcarrier group is a subcarrier with a highest frequency or a subcarrier with a lowest frequency in the subcarrier group.

4. The method according to claim 1, wherein each subcarrier group comprises three or more contiguous subcarriers.

5. The method according to claim 1, wherein the reference signal of the first terminal is a demodulation reference signal, DMRS.

6. A reference signal configuration method, comprising:
generating (S104), by a first terminal (400), a reference signal, wherein the first terminal uses a first waveform for communicating with a base station; and
sending (S105), by the first terminal, the reference signal according to resource configuration information received from the base station and indicating a resource unit to be used by the first terminal for sending the reference signal, wherein a time-frequency resource on which the resource unit is located comprises a plurality of contiguous symbols in time domain and a plurality of contiguous subcarriers in frequency domain, the reference signal is carried in at least one of the plurality of symbols in the time-frequency resource, the reference signal is carried in a plurality of subcarrier groups of said plurality of said plurality of contiguous subcarriers on the at least one of the plurality of symbols that carries the reference signal, each of the plurality of subcarrier groups comprises a plurality of contiguous subcarriers, wherein adjacent subcarrier groups of said plurality of subcarrier groups are spaced by a preset quantity of subcarriers, and the reference signal occupies one subcarrier in each subcarrier group of said plurality of subcarrier groups,
wherein the first waveform is a discrete Fourier transform-spread-orthogonal frequency division multiplexing DFT-S-OFDM waveform,
wherein each subcarrier in the plurality of subcarrier groups that carry the reference signal is used to carry in the same subcarrier a reference signal of a second terminal, wherein the second terminal uses a cyclic prefix-orthogonal frequency division multiplexing CP-OFDM waveform for communicating with the base station, and the reference signal of the second terminal is a demodulation reference signal, DMRS.

7. The method according to claim 6, wherein each subcarrier group comprises two contiguous subcarriers or three or more contiguous subcarriers.

8. The method according to claim 7, wherein a subcarrier occupied by the reference signal of the first terminal in each subcarrier group is a subcarrier with a highest frequency or a subcarrier with a lowest frequency in the subcarrier group.

9. The method according to claim 6, wherein the reference signal is a demodulation reference signal DMRS.

10. A terminal, wherein the terminal comprises a memory, a processor, a bus, and a transceiver, the memory stores code and data, the processor is connected to the memory by using the bus, and the processor runs the code in the memory to cause the terminal to perform the reference signal configuration method provided in any one of claims 6 to 9.

11. Abase station, wherein the base station comprises a memory, a processor, a bus, and a transceiver, the memory stores code and data, the processor is connected to the memory by using the bus, and the processor runs the code in the memory to cause the base station to perform the reference signal configuration method provided in any one of claims 1 to 5.

## Patentansprüche

1. Referenzsignalkonfigurationsverfahren, umfassend:
Erzeugen (S101) von Ressourcenkonfigurationsinformationen durch eine Basisstation (101), wobei die Ressourcenkonfigurationsinformationen verwendet werden, um eine Ressourceneinheit anzugeben, die durch ein Referenzsignal eines ersten Endgerätes belegt wird, wobei eine Zeit-Frequenz-Ressource, an der sich die Ressourceneinheit befindet, eine Vielzahl von zusammenhängenden Symbolen in der Zeitdomäne und eine Vielzahl von zusammenhängenden Unterträgern in der Frequenzdomäne umfasst, wobei das Referenzsignal des ersten Endgerätes in mindestens einem der Vielzahl von Symbolen getragen wird, wobei das Referenzsignal i des ersten Endgerätes in einer Vielzahl von Unterträgergruppen der Vielzahl von zusammenhängenden Unterträgern auf dem mindestens einen der Vielzahl von Symbolen getragen wird, welches das Referenzsignal des ersten Endgerätes trägt, wobei jede der Vielzahl von Unterträgergruppen eine Vielzahl von Unterträgern umfasst, deren Frequenzen zusammenhängend sind, wobei benachbarte Unterträgergruppen der Vielzahl von Unterträgergruppen durch eine zuvor festgelegte Menge an Unterträgern beabstandet sind, wobei das Referenzsignal des ersten Endgerätes einen Unterträger in jeder Unterträgergruppe der Vielzahl von Unterträgergruppen belegt, und wobei das erste Endgerät eine erste Wellenform zum Kommunizieren mit der Basisstation verwendet; und
Senden (S102) der Ressourcenkonfigurationsinformationen an das erste Endgerät durch die Basisstation,
wobei es sich bei der ersten Wellenform um eine Wellenform der diskreten Fourier-Transformation eines gespreizten orthogonalen Frequenzmultiplexverfahrens (DFT-S-OFDM) handelt,
wobei jeder Unterträger in der Vielzahl von Unterträgergruppen, der das Referenzsignal des ersten Endgerätes trägt, verwendet wird, um in demselben Unterträger ein Referenzsignal eines zweiten Endgerätes zu tragen, wobei das zweite Endgerät eine Wellenform des orthogonalen Frequenzmultiplexverfahrens mit zyklischem Präfix (CP-OFDM) zum Kommunizieren mit der Basisstation verwendet, und wobei es sich bei dem Referenzsignal des zweiten Endgerätes um ein Demodulationsreferenzsignal (DMRS) handelt.

2. Verfahren nach Anspruch 1, wobei jede Unterträgergruppe zwei zusammenhängende Unterträger umfasst.

3. Verfahren nach Anspruch 1, wobei es sich bei einem durch das Referenzsignal des ersten Endgerätes belegten Unterträger in jeder Unterträgergruppe um einen Unterträger mit einer höchsten Frequenz oder einen Unterträger mit einer niedrigsten Frequenz in der Unterträgergruppe handelt.

4. Verfahren nach Anspruch 1, wobei jede Unterträgergruppe drei oder mehr zusammenhängende Unterträger umfasst.

5. Verfahren nach Anspruch 1, wobei es sich bei dem Referenzsignal i des ersten Endgerätes um ein Demodulationsreferenzsignal (DMRS) handelt.

6. Referenzsignalkonfigurationsverfahren, umfassend:
Erzeugen (S104) eines Referenzsignals durch ein erstes Endgerät (400), wobei das erste Endgerät eine erste Wellenform zum Kommunizieren mit der Basisstation verwendet; und
Senden (S105) des Referenzsignals durch das erste Endgerät gemäß Konfigurationsinformationen, die von der Basisstation empfangen werden und eine Ressourceneinheit angeben, die durch das erste Endgerät zum Senden des Referenzsignals verwendet werden soll, wobei eine Zeit-Frequenz-Ressource, an der sich die Ressourceneinheit befindet, eine Vielzahl von zusammenhängenden Symbolen in der Zeitdomäne und eine Vielzahl von zusammenhängenden Unterträgern in der Frequenzdomäne umfasst, wobei das Referenzsignal in mindestens einem der Vielzahl von Symbolen in der Zeit-Frequenz-Ressource getragen wird, wobei das Referenzsignal in einer Vielzahl von Unterträgergruppen der Vielzahl der Vielzahl von zusammenhängenden Unterträgern auf dem mindestens einen der Vielzahl von Symbolen getragen wird, welches das Referenzsignal trägt, wobei jede der Vielzahl von Unterträgergruppen eine Vielzahl von zusammenhängenden Unterträgern umfasst, wobei benachbarte Unterträgergruppen der Vielzahl von Unterträgergruppen durch eine zuvor festgelegte Menge an Unterträgern beabstandet sind, und wobei das Referenzsignal einen Unterträger in jeder Unterträgergruppe der Vielzahl von Unterträgergruppen belegt,
wobei es sich bei der ersten Wellenform um eine Wellenform der diskreten Fourier-Transformation eines gespreizten orthogonalen Frequenzmultiplexverfahrens (DFT-S-OFDM) handelt,
wobei jeder Unterträger in der Vielzahl von Unterträgergruppen, der das Referenzsignal trägt, verwendet wird, um in demselben Unterträger ein Referenzsignal eines zweiten Endgerätes zu tragen, wobei das zweite Endgerät eine Wellenform des orthogonalen Frequenzmultiplexverfahrens mit zyklischem Präfix (CP-OFDM) zum Kommunizieren mit der Basisstation verwendet, und wobei es sich bei dem Referenzsignal des zweiten Endgerätes um ein Demodulationsreferenzsignal (DMRS) handelt.

7. Verfahren nach Anspruch 6, wobei jede Unterträgergruppe zwei zusammenhängende Unterträger oder drei oder mehr zusammenhängende Unterträger umfasst.

8. Verfahren nach Anspruch 7, wobei es sich bei einem durch das Referenzsignal des ersten Endgerätes belegten Unterträger in jeder Unterträgergruppe um einen Unterträger mit einer höchsten Frequenz oder einen Unterträger mit einer niedrigsten Frequenz in der Unterträgergruppe handelt.

9. Verfahren nach Anspruch 6, wobei es sich bei dem Referenzsignal um ein Demodulationsreferenzsignal (DMRS) handelt.

10. Endgerät, wobei das Endgerät einen Speicher, einen Prozessor, einen Bus und einen Sendeempfänger umfasst, wobei in dem Speicher Code und Daten gespeichert sind, der Prozessor unter Verwendung des Busses mit dem Speicher verbunden ist und der Prozessor den Code in dem Speicher ausführt, um das Endgerät dazu zu veranlassen, das Referenzsignalkonfigurationsverfahren nach einem der Ansprüche 6 bis 9 durchzuführen.

11. Basisstation, wobei die Basisstation einen Speicher, einen Prozessor, einen Bus und einen Sendeempfänger umfasst, wobei in dem Speicher Code und Daten gespeichert sind, der Prozessor unter Verwendung des Busses mit dem Speicher verbunden ist und der Prozessor den Code in dem Speicher ausführt, um die Basisstation dazu zu veranlassen, das Referenzsignalkonfigurationsverfahren nach einem der Ansprüche 1 bis 5 durchzuführen.

## Revendications

1. Procédé de configuration de signal de référence, comprenant :
la génération (S101), par une station de base (101), d'une information de configuration de ressource, dans lequel l'information de configuration de ressource est utilisée pour indiquer une unité de ressource occupée par un signal de référence d'un premier terminal, une ressource temps-fréquence sur laquelle est située l'unité de ressource comprend une pluralité de symboles contigus dans le domaine temporel et une pluralité de sous-porteuses contiguës dans le domaine fréquentiel, le signal de référence du premier terminal est acheminé dans au moins un de la pluralité de symboles, le signal de référence du premier terminal est acheminé dans une pluralité de groupes de sous-porteuses de ladite pluralité de sous-porteuses contiguës sur l'au moins un de la pluralité de symboles qui achemine le signal de référence du premier terminal, chacun de la pluralité de groupes de sous-porteuses comprend une pluralité de sous-porteuses dont les fréquences sont contiguës, dans lequel des groupes de sous-porteuses adjacents de ladite pluralité de groupes de sous-porteuses sont espacés d'une quantité prédéfinie de sous-porteuses, le signal de référence du premier terminal occupe une sous-porteuse dans chaque groupe de sous-porteuses de ladite pluralité de groupes de sous-porteuses, et le premier terminal utilise une première forme d'onde pour communiquer avec la station de base ; et
l'envoi (S102), par la station de base, de l'information de configuration de ressource au premier terminal,
dans lequel la première forme d'onde est une forme d'onde de multiplexage par répartition orthogonale de la fréquence à étalement à transformée de Fourier discrète DFT-S-OFDM,
dans lequel chaque sous-porteuse dans la pluralité de groupes de sous-porteuses qui acheminent le signal de référence du premier terminal est utilisée pour acheminer dans la même sous-porteuse un signal de référence d'un second terminal, dans lequel le second terminal utilise une forme d'onde de multiplexage par répartition orthogonale de la fréquence à préfixe cyclique CP-OFDM pour communiquer avec la station de base, et le signal de référence du second terminal est un signal de référence de démodulation, DMRS.

2. Procédé selon la revendication 1, dans lequel chaque groupe de sous-porteuses comprend deux sous-porteuses contiguës.

3. Procédé selon la revendication 1, dans lequel une sous-porteuse occupée par le signal de référence du premier terminal dans chaque groupe de sous-porteuses est une sous-porteuse avec une fréquence la plus élevée ou une sous-porteuse avec une fréquence la plus basse dans le groupe de sous-porteuses.

4. Procédé selon la revendication 1, dans lequel chaque groupe de sous-porteuses comprend trois sous-porteuses contiguës ou plus.

5. Procédé selon la revendication 1, dans lequel le signal de référence du premier terminal est un signal de référence de démodulation, DMRS.

6. Procédé de configuration de signal de référence, comprenant :
la génération (S104), par un premier terminal (400), d'un signal de référence, dans lequel le premier terminal utilise une première forme d'onde pour communiquer avec une station de base ; et
l'envoi (S105), par le premier terminal, du signal de référence selon une information de configuration de ressource reçue en provenance de la station de base et indiquant une unité de ressource à utiliser par le premier terminal pour envoyer le signal de référence, dans lequel une ressource temps-fréquence sur laquelle est située l'unité de ressource comprend une pluralité de symboles contigus dans le domaine temporel et une pluralité de sous-porteuses contiguës dans le domaine fréquentiel, le signal de référence est acheminé dans au moins un de la pluralité de symboles dans la ressource temps-fréquence, le signal de référence est acheminé dans une pluralité de groupes de sous-porteuses de ladite pluralité de sous-porteuses contiguës sur l'au moins un de la pluralité de symboles qui achemine le signal de référence, chacun de la pluralité de groupes de sous-porteuses comprend une pluralité de sous-porteuses contiguës, dans lequel des groupes de sous-porteuses adjacents de ladite pluralité de groupes de sous-porteuses sont espacés d'une quantité prédéfinie de sous-porteuses, et le signal de référence occupe une sous-porteuse dans chaque groupe de sous-porteuses de ladite pluralité de groupes de sous-porteuses,
dans lequel la première forme d'onde est une forme d'onde de multiplexage par répartition orthogonale de la fréquence à étalement à transformée de Fourier discrète DFT-S-OFDM,
dans lequel chaque sous-porteuse dans la pluralité de groupes de sous-porteuses qui acheminent le signal de référence est utilisée pour acheminer dans la même sous-porteuse un signal de référence d'un second terminal, dans lequel le second terminal utilise une forme d'onde de multiplexage par répartition orthogonale de la fréquence à préfixe cyclique CP-OFDM pour communiquer avec la station de base, et le signal de référence du second terminal est un signal de référence de démodulation, DMRS.

7. Procédé selon la revendication 6, dans lequel chaque groupe de sous-porteuses comprend deux sous-porteuses contiguës ou trois sous-porteuses contiguës ou plus.

8. Procédé selon la revendication 7, dans lequel une sous-porteuse occupée par le signal de référence du premier terminal dans chaque groupe de sous-porteuses est une sous-porteuse avec une fréquence la plus élevée ou une sous-porteuse avec une fréquence la plus basse dans le groupe de sous-porteuses.

9. Procédé selon la revendication 6, dans lequel le signal de référence est un signal de référence de démodulation DMRS.

10. Terminal, dans lequel le terminal comprend une mémoire, un processeur, un bus, et un émetteur-récepteur, la mémoire stocke un code et des données, le processeur est connecté à la mémoire en utilisant le bus, et le processeur exécute le code dans la mémoire pour amener le terminal à effectuer le procédé de configuration de signal de référence pourvu dans l'une quelconque des revendications 6 à 9.

11. Station de base, dans laquelle la station de base comprend une mémoire, un processeur, un bus, et un émetteur-récepteur, la mémoire stocke un code et des données, le processeur est connecté à la mémoire en utilisant le bus, et le processeur exécute le code dans la mémoire pour amener la station de base à effectuer le procédé de configuration de signal de référence pourvu dans l'une quelconque des revendications 1 à 5.
